# EUROPEAN PATENT SPECIFICATION

(11) **EP 1 169 166 B1**
(45) Date of publication and mention of the grant of the patent: **18.10.2006**
(21) Application number: 00914287.8
(22) Date of filing: 30.03.2000
(51) Int. Cl.: B29C 33/38

(54) **RAPID TEXTURE PROTOTYPING**
SCHNELLES HERSTELLUNGSVERFAHREN EINES PROTOTYPS MIT STRUKTURIERTER OBERFLÄCHE
PROTOTYPAGE RAPIDE DE TEXTURE

(30) Priority: 31.03.1999 GB 9907273
(43) Date of publication of application: 09.01.2002
(73) Proprietor: Eschmann-Stahl GmbH & Co. KG, 51645 Gummersbach (DE)
(72) Inventor: BROOKE, Nigel The Old Station House, Oldham, Lancashire OL3 5DE (GB); MILLER, Michael, Stuart, Buxton, Derbyshire SK17 9AG (GB)
(74) Representative: Lambert, Ian Robert
(86) International application number: PCT/GB2000/001226
(87) International publication number: WO 2000/058066

(56) References cited:
- EP-A- 0 400 672
- EP-A- 0 668 136
- WO-A-98/15372
- WO-A-99/03662
- WO-A-99/28113
- FR-A- 2 631 861
- GB-A- 2 246 536
- US-A- 3 723 584
- US-A- 4 490 410
- US-A- 5 182 063
- US-A- 5 483 890
- GROBHOLZ H: "NASE VORN" TECHNISCHE RUNDSCHAU,CH,HALLWAG VERLAG. BERN, vol. 87, no. 41, 13 October 1995 (1995-10-13), pages 46-47, XP000536402 ISSN: 1023-0823

## Description

This invention relates to rapid texture phototyping, with particular reference to the serial production of copies of a textured prototype.

Many moulded articles are made with a textured surface finish. Examples include interior trim parts for automobiles, knobs and handles for cooking utensils, garden furniture, casings for audio and video equipment, computers and calculators, and so on. Many of these items are made from large, expensive moulds. The moulds are first made with a smooth moulding cavity which must then be etched to produce the texture. Etching is done by applying a resist and immersing the mould in acid etchant.

Once etched, it will usually be impossible, or at best highly impracticable, to expunge the texture and apply a different texture. It is vital, therefore, for a designer to have some idea of how the product will look, textured. To this end, computer simulations are proposed in which the item can be imaged to a screen using CAD techniques and a texture superimposed. No matter to what state of excellence this type of simulation can be raised, however, it still cannot give the designer a textured, truly three dimensional component to build into a prototype assembly of, say, an automobile.

Furthermore, it is desirable that a number of copies of a prototype can be made, using the original rapid prototype as a formative model. Furthermore, once a prototype is produced having a surface texture which is deemed suitable, it is desirable that serial copies are produced for production purposes.

Various methods are known by which rapid prototypes can be produced using computer aided design (CAD) software to generate three dimensional (3D) prototype designs. In stereolithography, a tank containing a resinuous, UV sensitive polymer is selectively cured by UV radiation from, for example, a laser. The laser follows the CAD data profile to selectively cure the resin, building up layers of solid substrate. This procedure is accomplished by cross sectional "slicing" of the 3D CAD data to produce laminae of, for example, 0.1 mm thickness. The resin containing tank has a table positionable below the surface of the resin by an amount equal to the thickness of the lamina. The laser beam is tracked across this layer of resin to produce a thin layer of cured resin which is equivalent to the cross sectional CAD lamina. The table is then covered by an amount equal to the thickness of the lamina, and again the resultant layer of resin is cured by the laser beam so as to produce the physical equivalent of the next lamina in the CAD file. The process is repeated until the desired solid object us produced. Supporting structures can be added via the software: these structures are a part of the composite data file and are "grown" with the model required. On completion, the model is further treated, any supporting structures are removed, and the object is finished, to a produce smooth surface, by hand. It is highly advantageous that the object can be produced directly from a CAD design in a matter of days.

Other methods for rapid prototyping are Laminated Objective Manufacture (LOM) and Selective Laser Sintering (SLS). LOM involves computer driven cutting and lamination of thin paper sheets which are assembled as layers to produce a 3D model. SLS involves the direct sintering of polymeric particles or of a metal composite in a layered fashion to produce 3D objects.

Prototypes can also be made by direct casting of glass fibre (GRP) models. The models are themselves cast from a moulding of the original clay prototype produced by a designer/stylist. GRP castings or other resinous castings can be taken from such (untextured) production mould tools, as well as from directly machined resin blocks. In the latter instance, CAD data can be used to drive a computer controlled (CNC) milling machine which automatically follows the contours of the CAD model, cutting away the silicone or hard epoxy, are case from the mandrels. The moulding tools can then be used to produce multiple copies of the (untextured) mandrel.

None of these methods is able to property impart a textured surface finish on to the prototype, or onto a mould tool pattern, former or other "master".

EP-A-0400672 discloses a process for moulding articles in which a hologram or other microstructure is incorporated into the mould. This incorporation of a hologram or other microstructure can be achieved by applying the hologram or other microstructure to a model of the article, and forming a mould around the model.

FR-A-2631861 discloses a process for producing a mould in which texture is applied to a model, and a mould of the textured model is made through a multiple stage casting technique.

The present invention provides for rapid photocopying for textured-surface articles, including non-moulded articles, giving authentic pre-appreciation of both appearance and feel.

Furthermore, the present invention provides methods by which copies of such textured rapid prototypes can be made.

The invention comprises a method for producing copies of a textured prototype comprising the steps of:
applying a skin layer to a prototype to produce a textured prototype;
producing a mould of the textured prototype; and
using the mould to produce said copies;
characterised in that the skin layer comprises a release backing having relief material attached thereto as a texture; and the release backing is peeled off the prototype to leave the relief material attached to the prototype, thereby producing a textured prototype.

In this way, it is possible to produce many copies of a textured item very rapidly and at very low cost. The quality of the textured surface finish is very high, and even relatively short production runs of an item can become economically viable. Furthermore, the time taken from the conception of an idea to actual introduction into the market place can be greatly reduced.

An advantage with this approach is that the only material left attached to the prototype is the relief material, and therefore the dimensions of the underlying, untextured prototype are not altered. The relief material may be preferentially adhered to the prototype to enable peel off of the release backing.

However, the skin layer may be soluble and be dissolved after the relief material is adhered to the prototype. The skin layer may be soluble in a paint which is applied after application to the prototype - the skin layer then becomes absorbed into the paint layer.

The skin may be burnished on to the prototype - this may be done before and/or after removal of the skin layer, if done before, burnishing serves the purpose of improving adhesion to the prototype and helping to smooth out any imperfections in application. Burnishing may be effected by a densely-bristled brush, though other burnishing tools may be found more appropriate to specific patterns.

As to patterns, the texture may be a random pattern texture, such as the popular leather and woodgrain finishes. A textured skin suitable for such finishes is commercially available glass engraving resist, in which a resist pattern is carried on a release sheet for application to a glass surface which is then sand blasted, the glass surface being eroded except beneath the resist which is then removed. In the present application, the resist material becomes part of the textured surface of the pre-textured prototype.

The method of the invention is particularly advantageous, however, with geometric patterns used as texture. Such patterns can be readily created by a CAD arrangement which can control a cutting arrangement to cut the pattern into sheet material e.g. vinyl plastics sheeting. Such sheeting may be presented (in different thickness) on a release backing from which cut sheet may be separated, by differential bonding, on to a separate release sheet - there being then 'positive' and 'negative' versions of the pattern. Either release sheet then forms the skin layer of the textured skin.

The textured skin may alternatively be produced by other methods. Examples include the selective curing of photopolymers; screen printing onto a substrate; thermopolymer printing methods; and SLS and LOM techniques.

Whilst the overall effect of a random - leather, woodgrain etc - pattern may be visualizable by skilled designers, the way a regular geometric pattern texture sits on a curved surface is less easy to imagine. Indeed, difficulties are experienced in engraving even moderately complicated moulds with geometric pattern textures as a resist-carrying backing sheet usually has to be creased to fit the mould. Often, a regular geometric texture simply cannot be applied because of the difficulties of engraving the mould, this explaining a preponderance of random textures, principally leathers.

However, for prototyping purposes as disclosed herein, the skin may be arranged to be stretchable to fit without creasing on to the prototype and the texture is imparted to the skin (as by a CAD arrangement) in distorted fashion to compensate for skin stretching to fit the prototype.

A CAD or like system may be used to produce a template from which the textured skin is produced. The textured skin may be produced in a process wherein:
a design corresponding to the surface texture of the textured skin is produced on a CAD or like system; and
said design is cut from a sheet material under computer control.

The use of CAD enables textured surfaces to be produced very conveniently and directly in a very short time. Furthermore, there are limitless possibilities for the design of the textured surfaces, and corrections to a design can be made very easily, i.e., iteration is possible. Therefore, "tailoring" of a design can be achieved very rapidly. Furthermore, even short production runs of a unique, "one-off" design can become economically viable.

The design corresponding to the surface texture of the textured skin may be cut from the sheet material, and the cut design may be transferred from a release backing of the sheet material to the skin layer. It is possible to use CAD techniques in the production of textured skins in conjunction with other texture producing steps. For example, it is possible to use CAD system to produce a stencil or template, which is used to selectively cure a photopolymer. In this instance, the design cut from the sheet material can be a "negative" of actual surface texture of the textured skin.

The prototype itself may or may not be moulded. A non-moulded prototype may be produced by stereolithography, laminated object manufacture or selective laser sintering. Also, it is possible to apply a textured skin to a non-moulded prototype purely to simulate the appearance of a texture on the prototype, and not to mould copies of the textured prototype. It may not be desirable to produce such copies, because the appearance of the textured prototype may not be deemed acceptable. The purpose of such an approach is to visual the appearance of a given texture on a prototype, and it is possible to use as many textured surfaces on as many prototypes as is desired. A similar approach to aid the visualisation of textured, moulded articles is described in the present applicant's earlier International Publication No. WO 99/28113, the contents of which are herein incorporated by reference.

The mould can be produced in a number of ways by, for example, casting, moulding, electroforming.

The step of producing a mould of the textured prototype may comprise casting the textured prototype in a mould forming material, which may be silicone rubber.

The step of producing a mould of the textured prototype may comprise a slush moulding process in which a metal coating is electroformed onto the textured prototype or a replica thereof. The metal may be nickel. It is also possible to use RIM moulding (epoxy tools), in which a resin cast of a textured master model is made.

The step of producing a mould of the textured prototype may comprise a moulding process in which metal is sprayed onto the textured prototype or a replica thereof to form a metal shell.

Methods for simulating texture according to the invention will now be described with reference to the accompanying drawings, in which:
- Figure 1: is a diagrammatic cross-section through a mould;
- Figure 2: is a view of a prototype made using the mould of Figure 1;
- Figure 3: is a face-on-view of a textured skin layer to be applied to the prototype of Figure 2;
- Figure 4: is a cross-section through the textured skin applying layer of Figure 3, much enlarged;
- Figure 5: is a cross-section through part of the surface of the prototype of Figure 2, with the skin from Figures 3 and 4 in place, and showing burnishing;
- Figure 6: is a cross-section like Figure 5, showing peeling off a skin layer;
- Figure 7: is a cross-section like Figure 5, showing painting over a soluble skin layer;
- Figure 8: is a face-on-view of a textured skin applying layer of a geometric texture pattern;
- Figure 9: shows a textured prototype;
- Figure 10: is a schematic diagram showing steps in the production of copies of a textured prototype; and
- Figure 11: is a schematic diagram showing a) the application of a textured skin to a prototype, b) the removal of a release backing, c) relief material and gossamer film on the prototype, d) sand-blasting of the gossamer film, e) relief material on the prototype, f) painting the relief material, and g) the painted textured prototype.

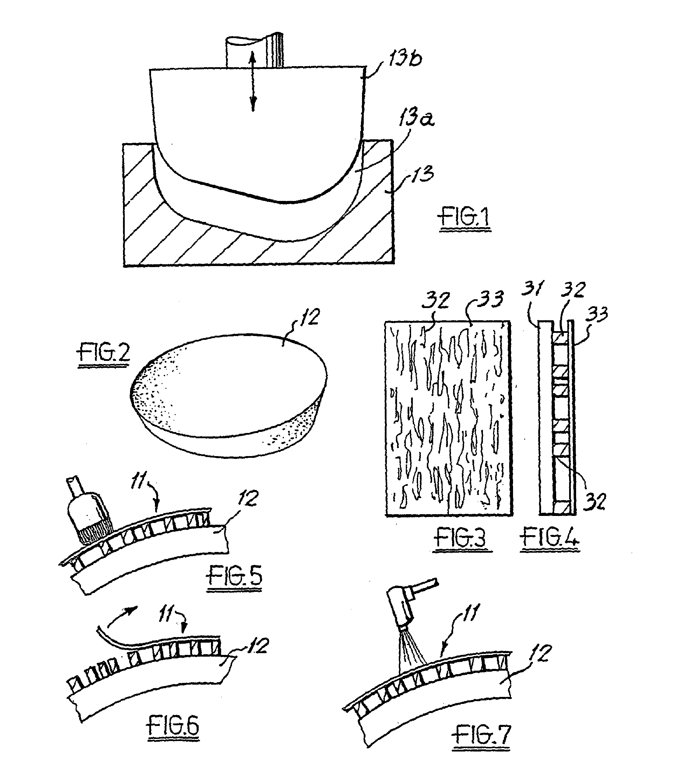

Figures 1-9 illustrate methods for producing copies of a textured prototype 90 comprising the steps of:
applying a textured skin 11 to a prototype 12 to produce a textured prototype 90;
producing a mould of the textured prototype; and
using a mould to produce said copies.

The prototype 12 can be moulded using a mould 13, as shown in Figure 1. The mould 13 comprises a mould cavity 13a and a cooperating former 13b. When first made the mould cavity is smooth-walled. For aesthetic reasons - as well as to conceal surface imperfections - or to provide grip (e.g. knurling on knobs, ribs on canister caps and so forth) it is usually intended that the visible surface (in the finished or assembled product of which the moulding is a component) is provided with a texture, which might be a random texture such as that of leather or woodgrain, or a regular geometric texture such as raised (or indented) cylindrical, square, diamond or other shaped areas arranged in a pattern. An example of a moulded prototype is a fibre glass moulding taken from prototype models which have been constructed in-house or by a model making service or from mandrels. Copies of textured prototypes can be produced by direct casting of a textured mandrel in a suitable material, such as silicone rubber or epoxy resins, to produce "textured" mould tools from which multiple copies of the textured prototype can be made. The mould tools can be hard or soft, depending on the material selected. Alternatively, mould tools can be produced by casting an untextured, original, "master" model. These mould tools are used to produce moulded prototypes which are then textured, and copies of these textured prototypes are made using the above described methods. In this way, identical moulded prototypes can be differently textured in order to assess the effect of different textures on a prototype moulding.

Alternatively, it is possible that the prototype is not moulded. Techniques such as stereolithography, LOM and SLS might be used to produce the prototype.

The texture is applied to the mould surface by acid etching using a resist. This is a procedure that does not usually allow of second thoughts, and there is a strong desire on the part of the designers to be able to visualize the finished product before the final step necessary to produce that product - namely the application of a textured finish to the mould wall - has been finally and irrevocably carried out.

To this end, according to the invention, a preferred texture or a selection of preferred textures is made from a library or designed from scratch using, for example, a CAD system. A moulding 12 is made from the pre-textured mould 13, or as many mouldings as there are textures to assess.

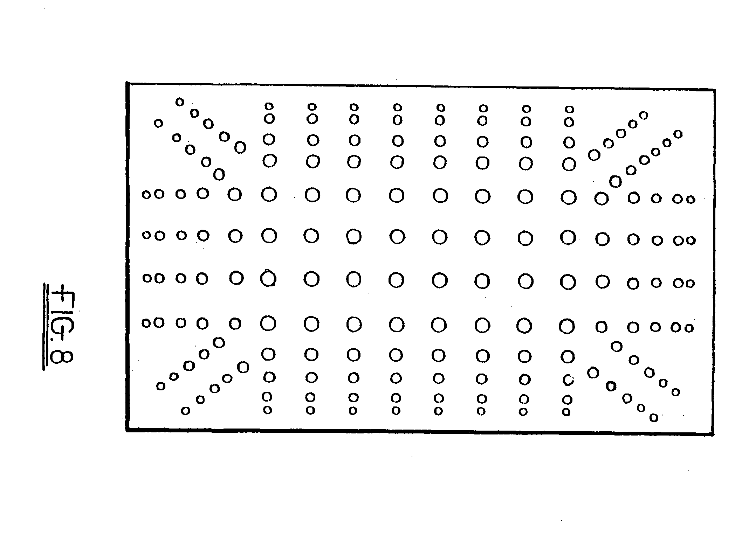

Figures 3 and 4 illustrate a commercially available product that is suitable for use in the method. This product is known as glass engraving resist and is used in engraving glass by sandblasting. It comprises a protective backing 31 covering a pattern 32 on a film 33. The pattern 32 is releasably adhered to the backing 31. The normal use of the resist (in glass engraving) will now be described. With the backing 31 stripped off the pattern 32 is applied to a glass surface, in its regular use, having been first sprayed with an adhesive if necessary, to adhere to the glass while the film 33 is peeled off. The pattern material 32 protects the underlying glass from erosion by the sand particles and is later washed off. The pattern material 32 is usually a cured photopolymer.

Using this product in the present invention, the backing 31 is removed and the pattern material 32 (which is attached to the film 33) is applied to the surface of the prototype 12, if necessary spraying the prototype 12 or the pattern material with a suitable adhesive. The film 33 and pattern material may now be securely pressed on to the prototype 12 as by burnishing - a brush 51 with densely packed bristles is an effective burnishing tool.

Further, now, the film 33 (which constitutes a release backing of the skin) is peeled off, as seen in Figure 6, for which it must be less well adhered to the pattern material 32 than the latter is to the prototype 12, or, if the material of the film is soluble in a suitable paint, such a paint is now sprayed on to the film 33 (Figure 7) which dissolves the film leaving the contours of the pattern material 32 covered with a uniform paint layer as a seemingly integral texture to the prototype 12.

It is desirable, in any event, to paint the surface now textured even if the film 33 is removed - it is a texture which is desired to be simulated, and uniformly coloured surface is appropriate.

It is possible to utilise resists made of other materials.

The glass engraving resist being a commercial product for an entirely different purpose, it cannot be expected that a full range of textures appropriate to entirely different circumstances would be available, nor that such a product could be available in bespoke designs, especially considering that, as used in the method taught herein, it is not a consumable of production, merely an adjunct to design. However, a wide, indeed practically limitless variety of designs can be readily produced using a CAD system, especially for geometric texture patterns. Basically, a CAD-produced design is used to cut a design out of sheet material, such as vinyl plastic sheet which may be supplied in roll form in a range of thicknesses, a thickness being selected according to the depth of relief required in the finished textured surface. The vinyl is cut to the required pattern while on a release backing and can be separated by the application of another release, or simply by peeling off from the backing a matrix out of which "islands" have been cut, leaving "positive" and "negative"patterns. This technique is very useful for producing logos.

A problem with geometric patterns is that, in a mould which has curvature in two directions, it is impossible to fit a pattern without cutting darts in the resist, and the same will be true of the simulation according to the invention.

Using CAD techniques, however, it will be possible to produce a distorted pattern, such as that seen in Figure 8 which can be based on biaxially orientable film and stretched appropriately to fit the moulding (when simulating) or the mould (when etching the mould) to compensate for the curvatures and yield a regular, well oriented texture pattern.

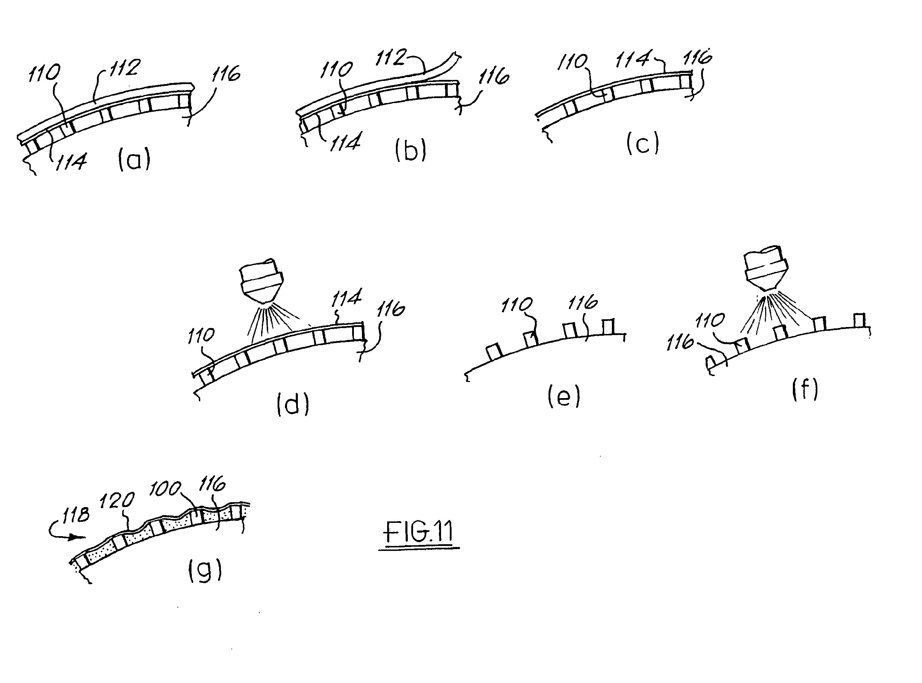

Figure 11 shows a further variation in which relief material 110 is attached to a release backing 112 via a thin, "gossamer" film 114. The relief material 110 is applied to a prototype 116 (Figure 11a) and the release backing 112 is peeled off (Figure 11b) to leave the relief material 110 on the prototype 116 with the gossamer film 114 still in place (Figure 11c). Next, the gossamer film 114 is removed by an abrasion, erosion or etching technique such as sandblasting (Figure 11d) to produce a prototype 116 having the relief material 110 only thereon (Figure 11e). The sandblasting also has the effect of firmly anchoring the relief material 110 onto the prototype 116. Finally, the prototype 116/relief material 110 is painted (Figure 11f) to produce a textured prototype 118 having a paint layer 120 in which the texture has a soft, aesthetically pleasing appearance to the eye (Figure 11g). It will be apparent from the foregoing that the relief material can be, in the context of the invention, considered to be attached to the release backing even if the attachment is indirect, via, for example, the gossamer film.

There are other ways in which the textured skin, in particular the relief material, can be produced. It is possible to selectively cure a photopolymer (usually by UV radiation) by a number of methods. For example, a master template mask can be used, or a light source such as a laser can be manoeuvred with respect to the photopolymer so as to accomplish a spatially selective cure. Such a procedure would be performed under computer control. It may be possible to use stereolithography to cure sheets of photopolymer, or to use systems such as SLS and fused deposition modelling (FDM). Another approach is selective deposition, for example of a metal, onto a carrier material. Another approch still is to produce texture on a carrier film via a thermopolymer printing process.

Yet another approach is to fill in a selectively engraved sheet or template with a relatively pliable material such as a resin or a wax, and to transfer the material to a carrier film. The selectively engraved sheet corresponds to a "negative" of the desired texture, and so the material used to fill the sheet corresponds to a "positive" of the desired texture. Other alternatives are to screen print a textured relief onto a substrate, and to employ cutting techniques whereby a material is cut and transferred to a carrier. LOM might be used in this context. The CAD cutting techniques described herein could also be used to produce film master templates for use in the production of textured relief in a number of the methods described above.

The result of the foregoing is a textured prototype 90. A mould of the textured prototype 90 is then produced, for example by casting the textured prototype 90 in a suitable mould forming material, such as silicone rubber, epoxy resin, spray metal, zinc, P20 investement cast tool steel, ceramic materials, and plaster. Other rapid tooling processes utilising metal powders mixed with a polymer to produce a metal alloy mould tool might be employed. In this way, copies of the textured prototype can be made. A preferred material for these copies is polyurethane, although the invention is not limited in this regard.

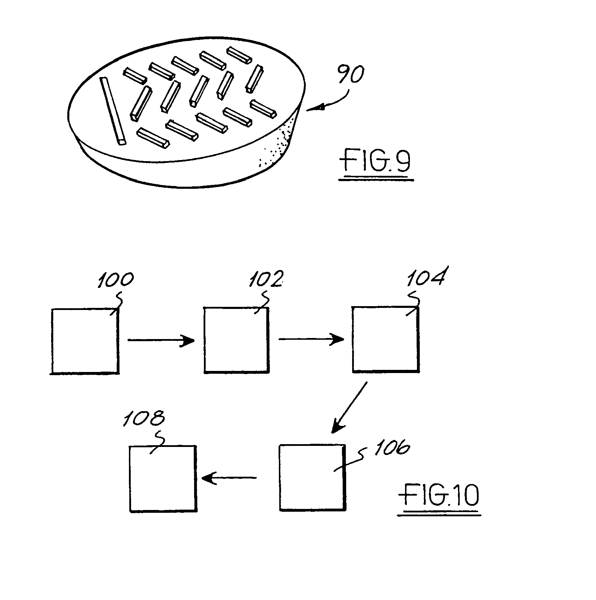

Figure 10 shows, in schematic fashion, process steps in another embodiment on the present invention. A prototype is produced using stereolithography stage 100. Next, a textured prototype is produced in a texturing step 102 such as those described herein. The textured prototype then undergoes a replication step 104 in which the textured prototype is cast in a mould-forming material, such as silicone rubber, and the cast is used to produce a former using a suitable former material, such as polyurethane. The former is a replica of the textured prototype. Next, a slush moulding step 106 is performed to produce a mould tool. In slush moulding, a metal shell is electroformed onto a former, which is this instance is the polyurethane former but more advantageously could be an epoxy resin (which can be provided with a conductive additive such as carbon to confer conductivity). The electroforming process produces a thin covering of nickel on the former, and thus this thin nickel coating holds the details of the texture of the original textured prototype, but in reverse. A mould tool suitable for injection moulding is produced by adding bolstering materials to the back of the nickel shell. Such a mould tool can be used in a moulding step 108 to produce tens of thousands of soft feel mouldings.

Another method for producing multiple moulded components involves producing a former in the manner described with reference to Figure 10, and then producing hard or soft mould tools from the former by spray metal, ceramic, plaster, ceramic slip or sand casting (to produce cast aluminium tooling) moulding techniques. The spray metal process involves spraying a metal plasma onto the surface of the former. The metal hardens on contact with the surface, and is deposited in layers to produce a very stable substrate which retains the details of the texture. The sprayed metal shell is then reinforced with resin to produce a moulding tool cavity. The core side of the tool is made by further processing of the mould so that a resultant metal tool can be quickly and cheaply produced for injection moulding. Non-limiting examples of suitable metals include nickel, copper and aluminum. It is also possible to apply the above described mould tool production methods to the textured prototype itself, rather than to a former produced from the textured prototype.

An important application of the present invention is in the automobile industry. Texture is an important aspect of numerous automobile components, such as interior trim parts and steering wheels. Often, for aesthetic purposes, it is important that the texture of adjacent articles is in perfect register. The production of rapid prototypes and the ability to produce accurate copies thereof is thus of great importance.

Another application area of great importance is rapid tooling, in particular low volume tooling and moulding. The present invention provides a flexible, cost effective, and convenient way in which a concept design can be rapidly implemented to provide differently textured tools.

Further areas of application and suitable moulding techniques are described below. The invention may be used in the manufacture of various vinyl products and rubber mats. Various polyurethane components can be conveniently produced by soft tooling. Injection moulding can be accomplished - for example, medium volume injection moulding from stereolithography prototypes is possible. Rotational moulding, for example using aluminium systems, is possible. "Epoxy tooling" is possible , in which cast resin polymeric moulds are used for serial production, for example in a "rimtool" technique. It is possible to cast in vinyl (TPO shims). Direct chromium plating onto the textured prototype is possible, as are the use of spray metal tooling techniques. Furthermore, it is possible to produce ceramic plaster moulds by casting around the textured prototype.

## Claims

1. A method for producing copies of a textured prototype (90) comprising the steps of:
applying a skin layer (11) to a prototype (12) to produce a textured prototype;
producing a mould of the textured prototype; and
using the mould to produce said copies;
**characterised in that** the skin layer comprises a release backing (33) having relief material (32) attached thereto as a texture, and the release backing is peeled off the prototype to leave the relief material attached to the prototype, thereby producing a textured prototype.

2. A method according to claim 1, in which the relief material is preferentially adhered to the prototype to enable peel off of the release backing.

3. A method according to claim 1 or claim 2, in which the skin layer is burnished on to the prototype.

4. A method according to any one of claims 1 to 3, in which the texture is a random pattern texture.

5. A method according to claim 4, in which the texture is a leather texture.

6. A method according to claim 4, in which the texture is a woodgrain texture.

7. A method according to any one of claims 4 to 6, in which the skin layer is a glass engraving resist.

8. A method according to any one of claims 1 to 3, in which the texture is a geometric pattern texture.

9. A method according to any previous claim in which a CAD or like system is used to produce a template from which the skin layer is produced.

10. A method according to claim 9 in which the skin layer is produced in a process wherein:
a design corresponding to the surface texture of the skin layer is produced on a CAD or like system; and
said design is cut from a sheet material under computer control.

11. A method according to claim 10, in which the design corresponding to the surface texture of the skin layer is cut from sheet material, and the cut design is transferred from a release backing of the sheet material to the skin layer.

12. A method according to any one of claims 1 to 11, in which the skin layer is stretchable to fit without creasing on to the prototype and the texture is imparted to the skin layer in distorted fashion to compensate for skin stretching to fit the prototype.

13. A method according to any previous claim in which the prototype is not moulded.

14. A method according to claim 13 in which the prototype is produced by stereolithography.

15. A method according to claim 13 in which the prototype is produced by laminated object manufacture or selective laser sintering.

16. A method according to any of claims 1 to 12 in which the prototype is moulded.

17. A method according to any previous claim in which the step of producing a mould of the textured prototype comprises casting the textured prototype in a mould forming material.

18. A method according to claim 17 in which the mould forming material is silicone rubber.

19. A method according to any of the previous claims in which the step of producing a mould of the textured prototype comprises a slush moulding process in which a metal coating is electroformed onto the textured prototype or a replica thereof.

20. A method according to claim 19 in which the metal is nickel.

21. A method according to any of claims 1 to 18 in which the step of producing a mould of the textured prototype comprises a moulding process in which metal is sprayed onto the textured prototype or a replica thereof to form a metal shell.

## Patentansprüche

1. Verfahren zur Herstellung von Kopien eines Prototyps (90) mit strukturierter Oberfläche, das die folgenden Schritte aufweist: Aufbringen einer Hautschicht (11) auf einen Prototyp (12) zur Herstellung eines mit strukturierter Oberfläche versehenen Prototyps; Herstellung einer Gießform des mit strukturierter Oberfläche versehenen Prototyps und Verwendung der Gießform zur Herstellung diesbezüglicher Kopien, **dadurch gekennzeichnet, daß** die Hautschicht einen lösbaren Rücken (33) mit einem Reliefmaterial (32) aufweist, das an dem Rücken als Struktur angebracht ist, und daß der ösbare Rücken von dem Prototyp so abgezogen wird, daß das Reliefmaterial an dem Prototyp hängenbleibt, um **dadurch** einen Prototyp mit strukturierter O-berfläche zu erzeugen.

2. Verfahren nach Anspruch 1, **dadurch gekennzeichnet, daß** das Reliefmaterial vorzugsweise an dem Prototyp so anhaftet, daß es von dem lösbaren Rücken abschälbar ist.

3. Verfahren nach Anspruch 1 oder 2, **dadurch gekennzeichnet, daß** die Hautschicht auf den Prototyp aufgebrannt wird.

4. Verfahren nach einem der Ansprüche 1 bis 3, **dadurch gekennzeichnet, daß** die strukturierte Oberfläche eine willkürlich gemusterte Struktur hat.

5. Verfahren nach Anspruch 4, **dadurch gekennzeichnet, daß** die strukturierte Oberfläche eine Lederstruktur hat.

6. Verfahren nach Anspruch 4, **dadurch gekennzeichnet, daß** die strukturierte Oberfläche eine Hoizschliffstruktur hat.

7. Verfahren nach einem der Ansprüche 4 bis 6, **dadurch gekennzeichnet, daß** die Hautschicht eine glasgravierungsresistente Schicht ist.

8. Verfahren nach einem der Ansprüche 1 bis 3, **dadurch gekennzeichnet, daß** die strukturierte Oberfläche ein geometrisches Strukturmuster hat.

9. Verfahren nach einem der vorhergehenden Ansprüche, bei dem ein CAD oder ähnliches System dazu benutzt wird, eine Schablone herzustellen, von der die Hautschicht erzeugt wird.

10. Verfahren nach Anspruch 9, **dadurch gekennzeichnet, daß** die Hautschicht in einem Prozeß hergestellt wird, bei dem ein Muster mit einem CAD oder ähnlichem System erzeugt wird, das der strukturierten Oberfläche der Hautschicht entspricht, und daß das Muster mit Computersteuerung aus einem Materialbogen ausgeschnitten wird.

11. Verfahren nach Anspruch 10, **dadurch gekennzeichnet, daß** das Muster entsprechend der strukturierten Oberfläche der Hautschicht aus dem Mäterialbogen ausgeschnitten wird und das ausgeschnittene Muster von einem lösbaren Rücken des Materialbogen auf die Hautschicht übertragen wird.

12. Verfahren nach einem der Ansprüche 1 bis 11, **dadurch gekennzeichnet, daß** die Hautschicht streckbar ist, so daß sie ohne Faltenbildung auf den Prototyp paßt, und daß die strukturierte Oberfläche auf die Hautschicht in verzerrtem Zustand aufgebracht wird, um die Hautstreckung zu kompensieren und **dadurch** dem Prototyp anzupassen.

13. Verfahren nach einem der vorhergehenden Ansprüche, **dadurch gekennzeichnet, daß** der Prototyp nicht spritzgegossen wird.

14. Verfahren nach Anspruch 13, **dadurch gekennzeichnet, daß** der Prototyp auf stereolithographischem Weg hergestellt wird.

15. Verfahren nach Anspruch 13, **dadurch gekennzeichnet, daß** der Prototyp durch Laminieren oder selektives Lasersintern hergestellt wird.

16. Verfahren nach einem der Ansprüche 1 bis 12, **dadurch gekennzeichnet, daß** der Prototyp spritzgegossen wird.

17. Verfahren nach einem der vorhergehenden Ansprüche, **dadurch gekennzeichnet, daß** der Schritt der Herstellung einer Gießform für den mit strukturierter Oberfläche versehenen Prototyp das Gießen des eine strukturierte Oberfläche aufweisenden Prototyps in einem formbildenden Material beinhaltet.

18. Verfahren nach Anspruch 17, **dadurch gekennzeichnet, daß** das formbildende Material Silikonkautschuk ist.

19. Verfahren nach einem der vorhergehenden Ansprüche, **dadurch gekennzeichnet, daß** der Schritt der Herstellung einer Form für den Prototyp mit strukturierter Oberfläche ein Schmier-Spritzgieß-Verfahren beinhaltet, bei dem eine Metallbeschichtung elektrisch auf die strukturierte Oberfläche des Prototyps oder einer Nachbildung von ihr aufgebracht wird.

20. Verfahren nach Anspruch 19, **dadurch gekennzeichnet, daß** das Metall Nickel ist.

21. Verfahren nach einem der Ansprüche 1 bis 18, **dadurch gekennzeichnet, daß** der Schritt der Herstellung einer Gießform für den mit einer strukturierten Oberfläche versehenen Prototyp ein Spritzgießverfahren beinhaltet, bei dem Metall auf den Prototypen mit strukturierter Oberfläche oder einer Machbildung des Prototyps zur Bildung einer metallenen Hülle aufgespritzt wind.

## Revendications

1. Procédé de production de copies d'un prototype texturé (90) comprenant les étapes consistant à :
- appliquer une couche de peau (11) sur un prototype (12) pour produire un prototype texturé ;
- produire un moule du prototype texturé ; et
- utiliser le moule pour produire lesdites copies ;
**caractérisé par le fait que** la couche de peau comprend un support anti-adhésif (33) ayant une matière en relief (32) attachée à celui-ci en tant que texture, et le support anti-adhésif est retiré par pelage du prototype pour laisser la matière en relief attachée au prototype, produisant de cette façon un prototype texturé.

2. Procédé selon la revendication 1, dans lequel la matière en relief est préférentiellement collée au prototype pour permettre un pelage du support anti-adhésif.

3. Procédé selon la revendication 1 ou la revendication 2, dans lequel la couche de peau est brunie sur le prototype.

4. Procédé selon l'une quelconque des revendications 1 à 3, dans lequel la texture est une texture à motif aléatoire.

5. Procédé selon la revendication 4, dans lequel la texture est une texture de cuir.

6. Procédé selon la revendication 4, dans lequel la texture est une texture de grain de bois.

7. Procédé selon l'une quelconque des revendications 4 à 6, dans lequel la couche de peau est une réserve de gravure sur verre.

8. Procédé selon l'une quelconque des revendications 1 à 3, dans lequel la texture est une texture à motifs géométriques.

9. Procédé selon l'une quelconque des revendications précédentes, dans lequel une conception assistée par ordinateur (CAO) ou un système analogue est utilisé pour produire un gabarit à partir duquel la couche de peau est produite.

10. Procédé selon la revendication 9, dans lequel la couche de peau est produite dans un procédé dans lequel ;
- un dessin correspondant à la texture de surface de la couche de peau est produit sur une CAO ou un système analogue ; et
- ledit dessin est découpé à partir d'un matériau de feuille sous contrôle informatique.

11. Procédé selon la revendication 10, dans lequel le dessin correspondant à la texture de surface de la couche de peau est découpé à partir d'un matériau de feuille, et le dessin découpé est transféré d'un support anti-adhésif du matériau en feuille à la couche de peau.

12. Procédé selon l'une quelconque des revendications 1 à 11, dans lequel la couche de peau est étirable pour s'adapter sans froissement sur le prototype et la texture est conférée à la couche de peau d'une façon déformée pour compenser l'étirement de la peau pour s'ajuster au prototype.

13. Procédé selon l'une quelconque des revendications précédentes, dans lequel le prototype n'est pas moulé.

14. Procédé selon la revendication 13, dans lequel le prototype est produit par stéréolithographie.

15. Procédé selon la revendication 13, dans lequel le prototype est produit par fabrication d'articles laminés ou par frittage sélectif au laser.

16. Procédé selon l'une quelconque des revendications 1 à 12, dans lequel le prototype est moulé.

17. Procédé selon l'une quelconque des revendications précédentes, dans lequel l'étape de production d'un moule du prototype texturé comprend le moulage par coulée du prototype texturé dans un matériau formant un moule.

18. Procédé selon la revendication 17, dans lequel le matériau formant un moule est du caoutchouc silicone.

19. Procédé selon l'une quelconque des revendications précédentes, dans lequel l'étape de production d'un moule du prototype texturé comprend un procédé de moulage par embouage dans lequel un revêtement métallique est électroformé sur le prototype texturé ou une réplique de celui-ci.

20. Procédé selon la revendication 19, dans lequel le métal est le nickel.

21. Procédé selon l'une quelconque des revendications 1 à 18, dans lequel l'étape de production d'un moule du prototype texturé comprend un procédé de moulage dans lequel le métal est pulvérisé sur le prototype texturé ou une réplique de celui-ci pour former un coquille métallique.
